# FASCICULE DE BREVET EUROPEEN

(11) **EP 0 857 840 B1**
(45) Date de publication et mention de la délivrance du brevet: **09.06.1999**
(21) Numéro de dépôt: 98440018.4
(22) Date de dépôt: 06.02.1998
(51) Int. Cl.: E04G 7/30, F16B 21/12

(54) **Système de guidage et de maintien axial d'une goupille**
Anordnung zum axialen Führen und Halten eines Stifts
System for axially guiding and holding a pin

(30) Priorité: 07.02.1997 FR 9701590
(43) Date de publication de la demande: 12.08.1998
(73) Titulaire: GUILLET S.A., F-67127 Molsheim Cedex (FR)
(72) Inventeur: Guillet, Gilles, 67380 Lingolsheim (FR)
(74) Mandataire: Littolff, Denis

(56) Documents cités:
- EP-A- 0 556 142
- EP-A- 0 596 404
- FR-A- 2 024 410

## Description

La présente invention concerne un système de guidage et de maintien axial d'une goupille en face de l'orifice de goupillage d'au moins un élément auquel est appliqué ce moyen de verrouillage.

Pour la compréhension de l'invention, on se référera dans la suite à un exemple d'application de l'invention, dont l'unique but est d'éclairer la description.

Il s'agit de la connexion de deux éléments de révolution coaxiaux, un manchon tubulaire fixé à l'extrémité d'une tubulure creuse et un embout mâle s'ajustant dans ledit manchon, le verrouillage des deux éléments étant réalisé par goupillage transversal.

Dans l'exemple utilisé, ledit embout est en fait symétrique par rapport à un plan médian perpendiculaire à son axe, et il s'ajuste de la même manière dans deux manchons identiques formant l'extrémité de deux tubulures également identiques, de sorte que lesdites tubulures soient fixées coaxialement bout-à-bout.

Selon une configuration préférentiellement utilisée, le manchon et l'embout comportent au moins une portion conique qui permet notamment de contrôler le positionnement axial de la liaison, alors qu'une rainure axiale pratiquée dans l'embout, coopérant avec un bossage correspondant du manchon, réalise le positionnement en rotation, de manière que les orifices de goupillage des éléments soient en vis-à-vis.

Les goupilles utilisées comportent elles-mêmes au moins une portion conique, assurant le blocage axial lorsqu'elles sont enfichées à l'aide d'un maillet.

Ce type de connexion axiale bout-à-bout se rencontre fréquemment dans le domaine des constructions notamment basées sur des poutrelles métalliques constituées de plusieurs tubulures cylindriques, agencées en triangle, rectangle, etc... Ces constructions utilisent un nombre relativement limité de pièces différentes, assemblées selon une multitude de configurations possibles nécessitant un nombre variable d'exemplaires de chaque pièce. Un grand nombre de structures dans le domaine du spectacle sont par exemple construites sur la base de ces pièces modulaires (portiques, supports, scènes, etc...).

Ces structures présentent l'avantage de pouvoir être montées et démontées très rapidement, quelle que soit la complexité de la construction qu'elles autorisent par ailleurs.

Chaque pièce de base du montage est reliée à une ou plusieurs autres via le système précité : deux poutrelles, ou une poutrelle et une pièce en coin, en T, en X, etc... sont assemblées via un embout placé successivement dans les manchons équipant les extrémités desdites pièces et le verrouillage s'effectue par un double goupillage dans lesdits manchons logeant la moitié d'un embout.

Au montage, il faut que l'agent chargé de verrouiller les connexions se munisse d'une provision de goupilles, qu'il porte avec lui à tout moment. Les structures à bâtir pouvant être de très grande taille, ledit opérateur doit impérativement prévoir d'emporter une quantité suffisante de goupilles, faute de quoi il pourrait se trouver obligé de redescendre par exemple du sommet d'un portique pour se réapprovisionner, laissant au surplus une liaison mal finie, entraînant un risque pour l'ensemble de la structure.

Le problème pratique de l'optimisation du montage se trouve donc lié à la question de la sécurité des monteurs d'une part, et des dommages que pourrait subir la structure en cas d'accident d'autre part.

Le démontage se fait usuellement à l'aide d'un maillet au moyen duquel on fait littéralement sauter les goupilles, qui sont éjectées de leur logement, et tombent à terre. Lorsque les structures sont importantes, et même pour des montages plus petits, il arrive fréquemment que le choc provoqué par le maillet soit tel que la goupille, projetée à un endroit aléatoire, ne soit pas retrouvée.

On ne récupère donc quasiment jamais tous les éléments de la structure, et il faut prévoir de renouveler partiellement le stock de goupilles à chaque nouvelle installation.

L'invention remédie à ces inconvénients.

L'objectif principal du système proposé est de permettre de garder les goupilles toujours à proximité de l'orifice de goupillage, au montage comme au démontage.

Un autre objectif est de faciliter le montage, car la goupille est positionnée de telle sorte que l'opérateur n'a besoin que de la pousser axialement dans son orifice de verrouillage.

Un autre objectif encore est de supprimer les pertes de goupilles au démontage.

Enfin, de manière générale, un autre objectif réside dans une optimisation de la relation homme / travail, grâce à une ergonomie du système largement améliorée.

Ces résultats, et d'autres, sont atteints par un système de guidage et de maintien axial d'une goupille en face de l'orifice de goupillage d'au moins un élément à goupiller, qui comporte des moyens pour assurer le guidage axial de ladite goupille entre au moins deux positions de repos assurant respectivement le verrouillage de la liaison par goupillage, et la libération de ladite liaison de goupillage.

Un tel système de guidage et de maintien axial d'une goupille a déjà fait l'objet d'au moins une réalisation, notamment divulguée par le document de brevet EP-A-0 596 404, qui concerne un mode de goupillage de tubulures par exemple utilisées pour la réalisation d'échafaudages.

Dans ce cadre, la goupille se présente sous la forme d'une manette à laquelle l'utilisateur imprime un mouvement combiné de rotation et de translation aboutissant soit au blocage de la liaison, soit à son déblocage. Cette goupille coopère avec un manchon externe, disposé radialement par rapport à l'un des tubes, qui réalise le guidage en translation et empêche la libération de la manette même en position de déblocage.

Lorsque les orifices des éléments à fixer l'un à l'autre sont en correspondance, rien ne s'oppose à l'enfoncement de la goupille qui bloque ainsi toute possibilité de mouvement axial desdits éléments. Dans le même temps, la rotation imprimée à la manette, qui est en quelque sorte la partie extérieure de la goupille, permet d'aboutir à un effet de blocage supplémentaire, car son extrémité libre, formant un coude, vient au contact de la paroi de l'élément opposée à celle qui comporte le manchon, et bloque tout mouvement axial de la goupille elle-même.

Bien que le but poursuivi dans le cadre de l'invention soit le même, à savoir assurer deux positions de repos stables, respectivement verrouillée et déverrouillée, les moyens utilisés sont très différents.

Lesdits moyens consistent en une lumière pratiquée dans une paroi disposée parallèlement à l'axe de goupillage, à proximité de l'orifice de goupillage, ladite lumière étant tracée pour définir un trajet came coopérant avec un élément élastique destiné à être solidarisé à la goupille et coulissant dans la lumière.

Le tracé du trajet came pratiqué dans la lumière de coulissement est symétrique par rapport à l'axe longitudinal de ladite lumière, et comporte deux rétrécissements disposés aux deux extrémités d'une portion rectiligne de la lumière, au-delà desquels sont disposées les zones correspondant aux positions de repos.

Selon une configuration possible, lesdits rétrécissements sont constitués par des bossages d'allure arrondie dont les courbes de raccordement aux portions contiguës de ladite lumière sont également d'allure continûment arrondie.

Le but de ce tracé particulier est de permettre le déplacement de la goupille sous l'action des chocs provoqués par le maillet, sans que les contraintes mécaniques exercées par le tracé sur l'élément élastique soient trop intenses.

D'où les bossages arrondis qui ne présentent aucune discontinuité ni ruptures angulaires.

Basiquement, le trajet came se présente donc comme une glissière classique bordée par deux goulets à la sortie desquels la largeur reprend la même valeur que dans ladite glissière.

L'élément élastique de préférence utilisé est un ressort en Ω, dont les deux portions d'extrémité en L coopèrent avec ledit trajet via les jambages desdits L, l'élasticité du ressort maintenant lesdits jambages au contact dudit trajet, les bases du L retenant la goupille par appui sur la paroi dans laquelle est pratiquée la lumière, la portion circulaire dudit ressort étant logée dans une gorge périphérique pratiquée dans la goupille.

Ce ressort assume en fait une double fonction, puisqu'il relie la goupille à la glissière de guidage d'une part, et que ses propriétés mécaniques particulières permettent de transformer la simple glissière en un trajet came ayant à son tour les propriétés spécifiques précitées.

Selon une configuration préférentielle, l'extrémité de ladite lumière située à distance de l'élément à goupiller comporte en outre une fente de largeur supérieure à la largeur moyenne du reste de la lumière, destinée à l'insertion du ressort en position de fonctionnement dans la lumière.

Il suffit pour cela de resserrer les deux branches d'extrémité du ressort.

La paroi dans laquelle est pratiquée la lumière est une plaque fixée à l'élément à goupiller.

Dans une poutrelle triangulaire, c'est-à-dire dotée de trois tubulures axiales parallèles disposées en triangle, une telle plaque peut comporter trois branches à 120°, reliées à l'extérieur par des arcs de cercle, et dotées chacune d'une lumière faisant trajet came ainsi qu'expliqué ci-dessus.

Comme également mentionné auparavant, les goupilles de préférence utilisées avec le système de l'invention sont dotées d'au moins une portion conique.

Elles sont martelées jusqu'à arriver en butée dans un logement conique correspondant de l'orifice de goupillage.

Le système de l'invention a été expliqué préférentiellement à l'aide de l'exemple des tubulures cylindriques, ou plus généralement des poutrelles comprenant lesdites tubulures.

L'invention concerne cependant également l'application du système expliqué au goupillage transversal de deux éléments de révolution coaxiaux.

Plus précisément, elle a également trait à la fixation par goupillage d'une tubulure creuse et d'un embout s'ajustant dans ladite tubulure au moyen d'au moins une portion conique s'insérant dans l'embouchure conique d'un manchon fixé à l'extrémité de ladite tubulure.

Les avantages substantiels de ce système, notamment dans les applications précitées, apparaîtront mieux au cours de la description qui suit, illustrée à l'aide des figures annexées, pour lesquelles :
- La figure 1 est une vue en perspective d'une poutrelle triangulaire à laquelle est appliqué le système de l'invention ;
- La figure 2 est une vue de la plaque dotée des lumières de guidage et reliant les trois tubulures de la poutrelle de la figure 1 ;
- La figure 3 est une vue éclatée du principe de liaison mécanique d'une goupille, de son ressort et de la lumière de guidage ; et
- La figure 4 est une vue de la liaison pour une seule tubulure.

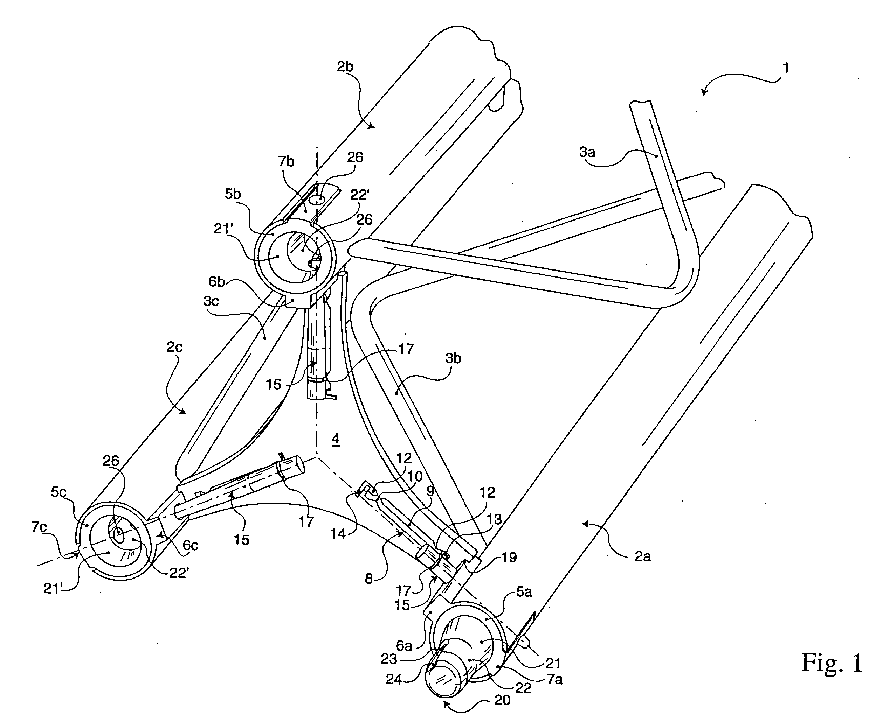

L'exemple préférentiel illustré par les figures 1 à 4 est celui qui a déjà été utilisé, qui ne doit cependant pas être considéré comme limitatif de l'invention.

La poutrelle (1) comporte trois tubulures (2a, 2b, 2c) cylindriques reliées par des renforts (3a, 3b, 3c), ainsi qu'une plaque d'extrémité (4) comportant trois branches à 120° l'une de l'autre.

A leur extrémité, les tubulures (2a, 2b, 2c) comprennent des manchons (5a, 5b, 5c) également sensiblement cylindriques, dotés de protubérances axiales opposées (6a, 6b, 6c ; 7a, 7b, 7c) s'insérant dans des fentes axiales correspondantes desdites extrémités. Ces manchons sont par exemple réalisés à l'aide de filières de forme adaptée et leur forme finale est obtenue par usinage classique.

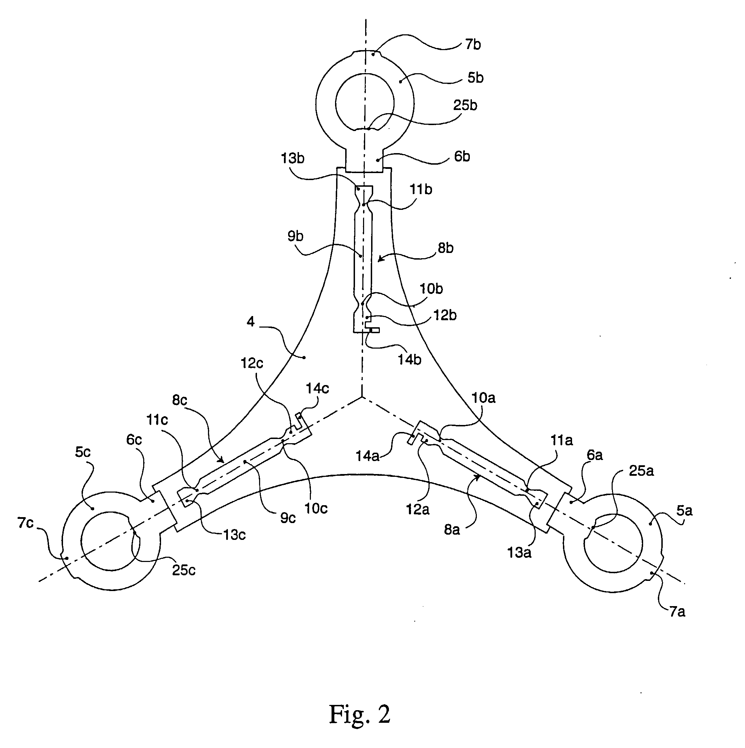

La plaque (4) à trois branches apparaît plus clairement en figure 2 : elle est soudée, à l'extrémité desdites branches, auxdites protubérances (6a, 6b, 6c) dont la surface externe est plane, de même que la surface externe des protubérances axiales (7a, 7b, 7c) est plane.

Cette plaque (4) contient, dans l'axe de chaque branche, une lumière (8a, 8b, 8c) de forme complexe permettant de guider et de maintenir les goupilles lorsqu'elles sont dans leurs différentes positions de fonctionnement.

A cet effet, chaque lumière comporte une zone centrale rectiligne (9a, 9b, 9c), limitée à ses deux extrémités par des rétrécissements (10a, 10b, 10c ; 11a, 11b, 11c) débouchant vers l'extérieur sur deux zones à nouveau plus larges (12a, 12b, 12c ; 13a, 13b, 13c). Enfin, l'une des extrémités de ces lumières (8a, 8b, 8c) est occupée par une fente transversale (14a, 14b, 14c) de plus grande largeur, destinée à l'insertion d'un élément ressort, comme ce sera expliqué ci-après.

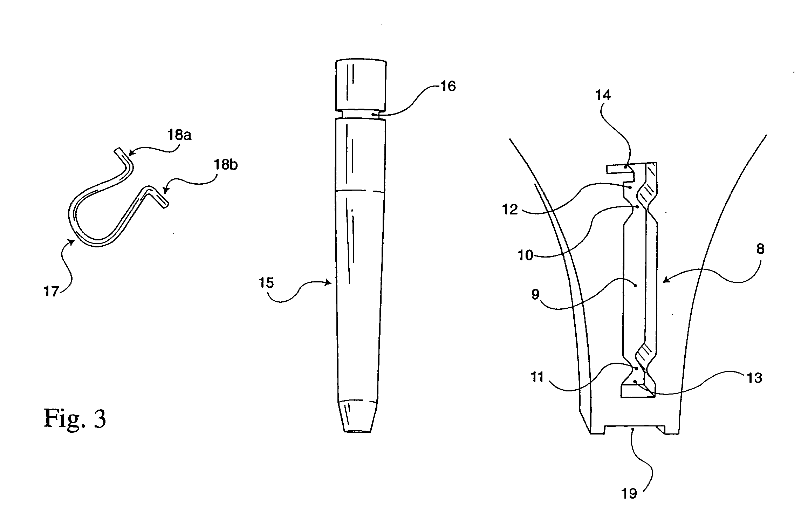

Sur la figure 3, les différents éléments participant au guidage de la goupille apparaissent plus en détail : la goupille (15) proprement dite, comportant dans sa partie supérieure une gorge périphérique (16) destinée à coopérer avec un ressort (17) en forme de Ω. Les deux branches d'extrémité (18a, 18b) en L placées en sortie du tronçon central circulaire du ressort sont prévues pour coopérer avec la lumière (8).

Les jambages des L glissent le long des parois latérales des glissières, alors que les bases desdits L retiennent l'ensemble ressort (17)/goupille (15) par appui sur la face opposée de la plaque (4) dans laquelle est pratiquée la lumière (8).

L'insertion du ressort (17) se fait par la fente supérieure (14), de largeur supérieure au reste de la glissière, acceptant les deux bases des L (18a, 18b) lorsqu'on comprime la partie circulaire.

Les deux positions de repos correspondent aux zones (12) et (13) de la lumière (8), lorsque le ressort (17) a franchi respectivement les rétrécissements (10) et (11).

Lorsque l'ensemble ressort (17)/goupille (15) est au repos dans la zone (12), la liaison par goupillage est libérée. Quelques coups de maillet vers l'autre extrémité de la lumière (8) entraînent ledit ensemble vers la zone (13) après franchissement du rétrécissement (11) : la liaison par goupillage est alors réalisée.

La forme particulière des bossages limitant latéralement lesdits rétrécissements (10, 11) n'oppose pas d'obstacle au mouvement dans les deux sens, mais permet d'assurer les positions de repos libérant ou verrouillant la liaison.

Les encoches (19) situées aux extrémités des branches à 120° de la plaque (4) permettent leur fixation aux excroissances (6a, 6b, 6c), par exemple par sondage.

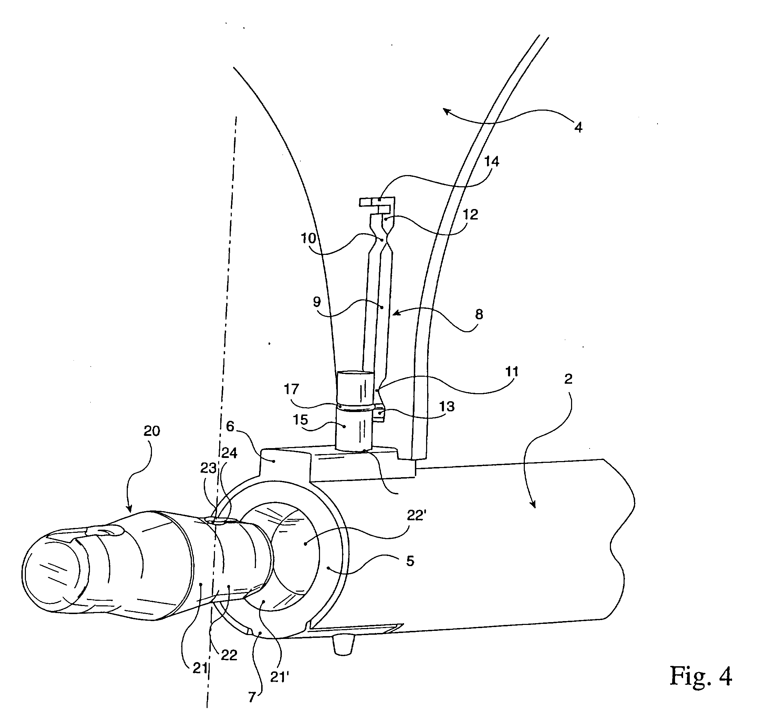

En référence à la figure 4, un embout (20) permettant de relier coaxialement deux tubulures (2) est placé dans l'axe de ladite tubulure (2) en position d'insertion. La forme extérieure de la moitié du volume dudit embout (20), par rapport à un plan médian perpendiculaire à l'axe, correspond à la forme intérieure du manchon (5).

En substance, une partie conique (21) s'adapte dans un alésage conique (21'), alors que la portion d'allure cylindrique (22) s'adapte dans une portion appropriée (22') du manchon (5).

Cette dernière portion (22) comporte un orifice traversant (23), au débouché duquel, sur une extrémité, a été fraisée une rainure (24). Cette rainure (24) s'adapte à un bossage correspondant (25), visible en figure 2, prévu dans ledit manchon (5), permettant à l'orifice (23) d'être d'office positionné coaxialement à l'orifice traversant (26) du manchon (5).

Dans cette figure, on a artificiellement représenté la goupille (15) en position de verrouillage, bien que l'embout (20) ne soit pas enfiché dans le manchon (5), à des fins illustratives. Ladite goupille (15) dépasse donc en partie inférieure, sous la tubulure (2), et elle est en position de repos, ressort (17) placé sous le rétrécissement (11) dans la zone (13).

Des coups de maillet de bas vers le haut auraient pour effet de repousser le ressort (17) et la goupille (15) vers le haut, jusqu'à atteindre la position de repos de la zone (12). Il n'est pas possible d'atteindre la fente (14), car il y a un épaulement qui obstrue partiellement son accès. La goupille (15) ne peut donc pas tomber.

Pour en revenir à la figure 1, les goupilles sont représentées en position de libération de la liaison dans les tubulures (2b, 2c), et en position de goupillage, embout (20) inséré, pour la tubulure (2a).

## Revendications

1. Système de guidage et de maintien axial d'une goupille (15) en face de l'orifice de goupillage (25, 23) d'au moins un élément à goupiller (5, 20), comportant des moyens pour assurer le guidage axial de ladite goupille (15) entre au moins deux positions de repos assurant respectivement le verrouillage de la liaison par goupillage, et la libération de ladite liaison de goupillage, caractérisé en ce que lesdits moyens consistent en une lumière (8) pratiquée dans une paroi (4) disposée parallèlement à l'axe de goupillage, à proximité de l'orifice (25) de goupillage, ladite lumière (8) étant tracée pour définir un trajet came coopérant avec un élément élastique (17) destiné à être solidarisé à la goupille (15) et coulissant dans la lumière (8).

2. Système de guidage et de maintien axial d'une goupille (15) selon la revendication 1, caractérisé en ce que le tracé du trajet came pratiqué dans la lumière (8) de coulissement est symétrique par rapport à l'axe longitudinal de ladite lumière (8), et comporte deux rétrécissements (10, 11) disposés aux deux extrémités d'une portion rectiligne (9) de la lumière (8), au-delà desquels sont disposées les zones correspondant aux positions de repos (12, 13).

3. Système de guidage et de maintien axial d'une goupille (15) selon la revendication précédente, caractérisé en ce que lesdits rétrécissements (10, 11) sont constitués par des bossages d'allure arrondie dont les courbes de raccordement aux portions contiguës de ladite lumière (8) sont également d'allure continûment arrondie.

4. Système de guidage et de maintien axial d'une goupille (15) selon l'une quelconque des revendications précédentes, caractérisé en ce que ledit élément élastique est un ressort (17) en Ω, dont les deux portions d'extrémité en L (18a, 18b) coopèrent avec ledit trajet came via les jambages desdits L, l'élasticité du ressort (17) maintenant lesdits jambages au contact dudit trajet, les bases des L retenant la goupille (15) par appui sur la paroi (4) dans laquelle est pratiquée la lumière (8), la portion circulaire dudit ressort (17) étant logée dans une gorge périphérique (16) pratiquée dans la goupille (15).

5. Système de guidage et de maintien axial d'une goupille (15) selon l'une quelconque des revendications précédentes, caractérisé en ce que l'extrémité de ladite lumière (8) située à distance de l'élément (5, 20) à goupiller comporte une fente (14) de largeur supérieure à la largeur moyenne du reste de la lumière (8), destinée à l'insertion du ressort (17) en position de fonctionnement dans la lumière (8).

6. Système de guidage et de maintien axial d'une goupille selon l'une quelconque des revendications précédentes, caractérisé en ce que la paroi dans laquelle est pratiquée la lumière est une plaque (4) fixée à un des éléments (5) à goupiller.

7. Système de guidage et de maintien axial d'une goupille selon l'une quelconque des revendications précédentes, caractérisé en ce que les goupilles (15) sont dotées d'au moins une portion conique.

8. Application du système de guidage et de maintien axial d'une goupille (15) selon l'une quelconque des revendications précédentes au goupillage transversal de deux éléments de révolution coaxiaux.

9. Application du système de guidage et de maintien axial d'une goupille (15) selon la revendication précédente à la fixation par goupillage d'une tubulure creuse (2) et d'un embout (20) s'ajustant dans ladite tubulure (2) au moyen d'au moins une portion conique (21) s'insérant dans l'embouchure conique (21') d'un manchon (5) fixé à l'extrémité de ladite tubulure (2).

## Patentansprüche

1. System zum axialen Führen und Halten eines Stifts (15) gegenüber der Verstiftungsöffnung (25, 23) wenigstens eines zu verstiftenden Elements (5, 20), mit Mitteln zum Sicherstellen der axialen Führung des Stifts (15) zwischen wenigstens zwei Ruhepositionen, die die Verriegelung der Verbindung durch Verstiftung bzw. die Freigabe der Verstiftungsverbindung gewährleisten, dadurch gekennzeichnet, daß die Mittel aus einem Langloch (8) bestehen, das in einer Wand (4) ausgebildet ist, die parallel zur Verstiftungsachse in der Nähe der Verstiftungsöffnung (25) angeordnet ist, wobei das Langloch (8) in der Weise verläuft, daß eine Nockenbahn definiert wird, die mit einem elastischen Element (17) zusammenwirkt, das dazu vorgesehen ist, mit dem Stift (15) verbunden zu werden, und im Langloch (8) gleitet.

2. System zum axialen Führen und Halten eines Stifts (15) nach Anspruch 1, dadurch gekennzeichnet, daß der Verlauf der im Gleitlangloch (8) ausgebildeten Nockenbahn in bezug auf die Längsachse des Langlochs (8) symmetrisch ist und zwei Verengungen (10, 11) aufweist, die an den beiden Enden eines geradlinigen Abschnitts (9) des Langlochs (8) angeordnet sind und jenseits derer sich die Zonen befinden, die den Ruhepositionen (12, 13) entsprechen.

3. System zum axialen Führen und Halten eines Stifts (15) nach dem vorangehenden Anspruch, dadurch gekennzeichnet, daß die Verengungen (10, 11) durch Höcker mit abgerundetem Verlauf gebildet sind, deren Verbindungskrümmungen mit den angrenzenden Abschnitten des Langlochs (8) ebenfalls einen ununterbrochen, abgerundeten Verlauf besitzen.

4. System zum axialen Führen und Halten eines Stifts (15) nach irgendeinem der vorangehenden Ansprüche, dadurch gekennzeichnet, daß das elastische Element eine Ω-Feder (17) ist, deren zwei L-Endabschnitte (18a, 18b) mit der Nockenbahn über die Unterlängen des jeweiligen L zusammenwirken, wobei die Elastizität der Feder (17) die Unterlängen mit der Bahn in Kontakt halt, wobei die Basen des jeweiligen L den stift (15) durch Abstützung an der Wand (4), in der das Langloch (8) ausgebildet ist, halten, wobei der kreisförmige Abschnitt der Feder (17) sich in einer Umfangsnut (16) befindet, die im Stift (15) ausgebildet ist.

5. System zum axialen Führen und Halten eines Stifts (15) nach irgendeinem der vorangehenden Ansprüche, dadurch gekennzeichnet, daß das Ende des Langlochs (8), das von dem zu verstiftenden Element (5, 20) beabstandet ist, einen Schlitz (14) enthält, dessen Breite größer als die mittlere Breite des übrigen Langlochs (8) ist und der dazu vorgesehen ist, daß die Feder (17) in der Arbeitsposition in das Langloch (8) eingeschoben wird.

6. System zum axialen Führen und Halten eines Stifts nach irgendeinem der vorangehenden Ansprüche, dadurch gekennzeichnet, daß die Wand, in der das Langloch ausgebildet ist, eine an einem der zu verstiftenden Elemente (5) befestigte Platte (4) ist.

7. System zum axialen Führen und Halten eines Stifts nach irgendeinem der vorangehenden Ansprüche, dadurch gekennzeichnet, daß die Stifte (15) mit wenigstens einem konischen Abschnitt versehen sind.

8. Anwendung des Systems zum axialen Führen und Halten eines Stifts (15) nach irgendeinem der vorangehenden Ansprüche auf die transversale Verstiftung zweier koaxialer, rotationssymmetrischer Elemente.

9. Anwendung des Systems zum axialen Führen und Halten eines Stifts (15) nach dem vorangehenden Anspruch auf die Verstiftungsbefestigung eines hohlen Rohrstutzens (2) an einem Ansatzstück (20), das in den Rohrstutzen (2) wenigstens mittels eines konischen Abschnitts (21) eingepaßt ist, der in die konische Mündung (21') einer am Ende des Rohrstutzens (2) befestigten Hülse (5) eingesetzt ist.

## Claims

1. System for guiding a pin (15) and keeping it axial opposite the pinning orifice (25, 23) of at least one element which is to be pinned (5, 20), the said system having means for effecting the axial guidance of the said pin (15) between at least two rest positions respectively effecting the locking of the connection by pinning and the release of the said pinning connection, characterised in that the said means consist in an aperture (8) formed in a wall (4) disposed parallel to the pinning axis, in proximity to the pinning orifice (25), the said aperture (8) being laid out so as to define a cam path cooperating with an elastic element (17) intended to be attached to the pin (15) and sliding in the aperture (8).

2. System for guiding a pin (15) and keeping it axial according to claim 1, characterised in that the layout of the cam path formed in the sliding aperture (8) is symmetrical in relation to the longitudinal axis of the said aperture (8), and has two narrow parts (10, 11) disposed at the two ends of a rectilinear portion (9) of the aperture (8), beyond which narrow parts are disposed the zones corresponding to the rest positions (12, 13).

3. System for guiding a pin (15) and keeping it axial according to the preceding claim, characterised in that the said narrow parts (10, 11) are constituted by bosses of rounded appearance, whose curves connecting them to the contiguous portions of the said aperture (8) are likewise of continuously rounded appearance.

4. System for guiding a pin (15) and keeping it axial according to any one of the preceding claims, characterised in that the said elastic element is an Ω-shaped spring (17), the two L-shaped end portions (18a, 18b) of which cooperate with the said cam via the legs of the said L's, the elasticity of the spring (17) keeping the said legs in contact with the said path, the bases of the L's retaining the pin (15) by resting on the wall (4) in which the aperture (8) is formed, the circular portion of the said spring (17) being lodged in a peripheral throat (16) formed in the pin (15).

5. System for guiding a pin (15) and keeping it axial according to any one of the preceding claims, characterized in that that end of the said aperture (8) which is located remotely from the element (5, 20) to be pinned has a slot (14) with a width greater than the average width of the rest of the aperture (8), which slot is intended for the insertion of the spring (17) in the working position in the aperture (8).

6. System for guiding a pin and keeping it axial according to any one of the preceding claims, characterised in that the wall in which the aperture is formed is a plate (4) fixed to one of the elements (5) to be pinned.

7. System for guiding a pin and keeping it axial according to any one of the preceding claims, characterised in that the pins (15) are equipped with at least one conical portion.

8. Application of the system for guiding a pin (15) and keeping it axial according to any one of the preceding claims, to the transverse pinning of two coaxial elements of revolution.

9. Application of the system for guiding a pin (15) and keeping it axial according to the preceding claim, to the fixing, by pinning, of a hollow tubulature (2) and of a tip (20) fitting into the said tubulature (2) by means of at least one conical portion (21) which is inserted in the conical mouth (21') of a sleeve (5) fixed to the end of the said tubulature (2).
